# EUROPEAN PATENT APPLICATION

(11) **EP 4 685 406 A1**
(43) Date of publication of application: **28.01.2026**
(21) Application number: 24191136.1
(22) Date of filing: 26.07.2024
(51) Int. Cl.: F24F 7/08, F24F 11/00, F24F 11/72, F24F 12/00, F24F 13/02, F24F 13/04, F24F 13/10

(54) **AIR MANAGEMENT SYSTEM AND METHOD FOR AIR MANAGEMENT**

(71) Applicant: Natural Dynamics Oy, 10300 Karjaa (FI)
(72) Inventor: Dmitriev, Nikolai, 10300 Karjaa (FI); Brezgin, Vladimir, 10300 Karjaa (FI)
(74) Representative: Kolster Oy Ab

(57) **Abstract**

The present disclosure relates to an air management system (A) for ventilation of spaces (1, 2, 3, 4, ... , n) comprising an air collector (6), at least two incoming air ducts (10A-F) for directing air flow from said spaces fluidly connected to the air collector (6). The system comprises at least two dampers (Z1, Z2, Z3, Z4, ... , Zn) each configured to selectively adjust the incoming air flow from one of said at least two incoming air ducts; at least one air quality sensor (7) configured to measure the air quality of air flow passing the at least one air quality sensor (7), and a controller (8) configured to control the opening and closing of the at least two dampers. The collector (6) comprises a partition (44B) configured to divide a cavity defined by the collector into at least two sub-compartments (46A,46B), each of the sub-compartments (46A,46B) comprising at least one of the ducts, and where the partition comprises a damper (44A) configured to selectively adjust the air flow between the at least two sub-compartments (46A,46B).

## Description

### FIELD OF THE INVENTION

The invention relates to an air management system and a method for ventilation. Particularly, the invention relates to mechanically forced ventilation of a building with separate ducts for supplied and exhausted air.

### BACKGROUND OF THE INVENTION

A ventilation system of a building maintains the required sanitary and hygienic parameters of the microclimate the building. An adaptive ventilation system works adaptively to the occupancy of a large room by people in terms of the area of the room and in time.

A ventilation system may comprise an air collector, adjustable dampers and a control unit with air quality sensors. Related prior art has been disclosed in utility model publication RU 109532 U1, which discloses an adaptive ventilation system for large air volumes built on the principle of multi-zone, decentralized and periodicity of operation, in each zone it contains a set of zonal subsystems: a supply and exhaust ventilation unit, air distribution devices with constant air distribution parameters, curtains made of airtight material around the perimeter of each zone, precision CO2 sensors located in the ceiling space and in the serviced area of the room, a temperature sensor installed in the supply air duct, a controller that processes signals from the sensors and controls the operation of the supply and exhaust systems.

One of disadvantages of this system is the use of more than one carbon dioxide sensor.

### SUMMARY OF THE INVENTION

The object of the invention is to introduce an improved ventilation or air management system and an improved method for ventilation or air management. An object is to introduce a solution by which one or more of the above defined problems of prior art and/or drawbacks discussed or implied elsewhere in the description can be solved.

According to a first aspect of the invention there is provided: an air management system for ventilation of spaces comprising: an air collector, at least two incoming air ducts for directing air flow from said spaces fluidly connected to the air collector, at least two dampers each configured to selectively adjust the incoming air flow from one of said at least two incoming air ducts; at least one air quality sensor configured to measure the air quality of air flow passing the at least one air quality sensor, and a controller configured to control the opening and closing of the at least two dampers; characterized in that: the collector comprises a partition configured to divide a cavity defined by the collector into at least two sub-compartments, each of the sub-compartments comprising at least one of the ducts.

The spaces may be provided in a building. The air management system may comprise a ventilation system.

The partition may comprise a damper configured to selectively adjust the air flow between the at least two sub-compartments. The damper may be adjustable to selectively allow and/or prevent airflow between the at least two sub-compartments.

One of the sub-compartments may comprise an air exhaust and an other of sub-compartments comprises an air supply. The air exhaust and/or air supply may be operatively connected to the external/ambient environment (i.e. they draw therefrom or vent thereinto).

The sensor may be provided adjacent/within the air exhaust (i.e. to measure the air flowing therethrough). The air exhaust may provide the collector.

The air exhaust and the air supply may be operatively connected via a heat recovery system. The heat recovery system may transfer heat from the air exhaust to the air supply. The heat recovery system may comprise a heat exchanger. The sensor may be provided within the heat recovery system or within an inlet thereto. The sensor may be provided in one or more space and/or duct thereof.

One or more space may be connected to the air supply, and the space is fluidly connected to the sensor to allow measurement of the air quality flowing from said space.

When air is being exhausted from air exhaust and air is being supplied air supply, the controller may be configured to close the partition damper. When air is being exhausted from air exhaust and air is being supplied air supply (i.e. when in a ventilation mode) the sub-compartments are fluidly separated/disconnected.

The air supply may comprise a damper to selectively adjust the airflow through the air supply.

The sub-compartments may be operatively connected to different respective environments or spaces having different air quality. At least one of the ducts in one sub-compartment may connected to an environment having a relatively lower air quality, and at least one of the ducts in an other sub-compartment may be connected to an environment having a relatively higher air quality.

The air quality may be determined by levels of one or more of: carbon dioxide; carbon monoxide; humidity; odour; or dust.

The controller may be configured to sequentially open two or more dampers to measure the respective air quality flowing therethrough. The controller may be configured open the partition damper before/during said measurement. The controller may be configured close the air supply damper before/during said measurement.

The controller may be configured to control the opening and closing of the at least two dampers in accordance with the air quality measured by the at least one air quality sensor. The controller may open a given damper is the measured air quality in the space connected thereto is outside a predetermined parameter. The parameter may comprise a predefined threshold (i.e. the damper is opened or closed if the measured air quality of below or above a predefined threshold). Each of the dampers may be selectively actuable.

The damper may only be opened if the air in a given space is outside a predefined parameter (e.g. to provide ventilation thereto). The predefined parameter may comprise a carbon dioxide level. The space may be ventilated if the predefined parameter is threshold level, and the measured value is above or below said threshold. The predefined parameter may comprise a gas concentration threshold, and ventilation may only be provided if the measured gas level is above said predetermined threshold.

The ventilation system may comprise at least one fan configured to drive air through the system. Operation of the fan may be determined in accordance with the air quality measured by the at least one air quality sensor.

The system may heat and/or dry a heat exchanger of the heat recovery system. The heating and/or drying may be performed during a test mode of the system.

According to a further aspect of the invention there is provided: a method of operating an air management system for ventilation of spaces comprising: providing an air collector with at least two incoming air ducts and directing air flow from said spaces to the air collector, providing at least two dampers each configured to selectively adjust the incoming air flow from one of said at least two incoming air ducts; providing at least one air quality sensor configured to measure the air quality of air flow bypassing the at least one air quality sensor, and a controller configured to control the opening and closing of the at least two dampers; characterized in that: the collector comprises a partition configured to divide a cavity defined by the collector into at least two sub-compartments, each of the sub-compartments comprising at least one of the ducts.

The method may comprise adjusting the air flow between the at least two sub-compartments via a damper provided by the partition. The method may comprise exhausting air from one of the sub-compartments and supply air from an other of sub-compartments.

The method may comprise supplying air to one or more space via an air supply, and subsequently testing the air quality of said space.

The method may comprise connecting at least one of the ducts in one sub-compartment to an environment having a relatively lower air quality, and connecting at least one of the ducts in an other sub-compartment to an environment having a relatively higher air quality.

According to further aspect of the invention, there is provided: a new ventilation or air management system for ventilation of spaces of a building ventilation system for ventilation of spaces comprising an air collector, at least two incoming air ducts for directing air flow from said spaces, connected to the air collector, at least two dampers each configured to adjust the incoming air flow from one of said at least two incoming air ducts, one air outlet duct for directing the air flow out of the ventilation system, at least one air quality sensor configured to measure the air quality of air flow passing the at least one air quality sensor, and a control unit is configured to control the opening and closing of the at least two dampers.

The system may be characterized in that the at least one air quality sensor is configured to sense the air quality of the air flowing in turn from said spaces in the air collector which is determining a single location where the at least one air quality sensor is arranged as a single set of air quality sensors.

According to an embodiment the control unit is configured to control the opening and closing of the at least two dampers based on the information received from the at least one air quality sensor. According to an embodiment the ventilation system is configured, at preset intervals, to analyze the air quality in each space to be ventilated in turn. According to an embodiment the adjustable dampers are configured to be opened alternately one at a time and said at least one air quality sensor is configured to analyze the air passing from each space to be ventilated in turn.

According to an embodiment the at least one air quality sensor comprises at least one of the following: a CO2 sensor, a humidity sensor, and other harmful concentration sensor. According to an embodiment the ventilation system is configured in a ventilation cycle, after a testing cycle for analyzing the air quality in each space a preset air quality testing time, to open or to leave open for a preset time for air flow intake only those dampers relating to air quality parameter values exceeding the preset air quality parameters.

According to an embodiment the ventilation system is configured, after the testing and ventilation cycles, to repeat alternatingly the testing and ventilation cycles, or to switch off in case no one of the air quality parameters does exceed the preset air quality values. According to an embodiment the air collector is formed of said outlet duct and the at least one air quality sensor is connected to said outlet duct.

According to an embodiment, the air collector is case or box shaped, wherein the outlet duct is connected to the air collector to forward the air flow out of the air collector, and the at least one air quality sensor is connected to said air collector case or box. According to an embodiment the adjustable dampers are installed within the air collector. According to an embodiment the control unit is configured to control a fan of the ventilation system or a fan included in the building to be ventilated such as a private house.

According to a further aspect of the invention, there is provided: a method for ventilating comprising providing a ventilation system according to the preceding aspect, and sensing by the at least one air quality sensor the air quality of the air flowing in turn from said spaces in the air collector in a single location where the at least one air quality sensor is arranged as a single set of air quality sensors.

According to an embodiment, the method comprises controlling by the control unit the opening and closing of the at least two dampers based on the information received from the at least one air quality sensor. According to an embodiment the method comprises, after a testing cycle for analyzing the air quality in each space a preset air quality testing time, opening or leaving open in a ventilation cycle, for a preset time for air flow intake only those dampers relating to air quality parameter values exceeding preset air quality parameters.

According to an embodiment the method comprises, after the testing and ventilation cycles, repeating alternatingly the testing and ventilation cycles, or switching off the ventilation in case no one of the air quality parameters does exceed the preset air quality values.

Any aspect of the invention may be combined with any other aspect of the invention where practicable.

### BRIEF DESCRIPTION OF THE DRAWINGS

In the following the present invention will be described in closer detail by means of preferred embodiments with reference to the attached drawings, in which:
Figures 1 and 3 shows a schematic view of a first embodiment of an adaptive ventilation system;
Figure 2 shows a schematic view of a second embodiment of an adaptive ventilation system;
Figure 4 shows a schematic view of a third embodiment of an adaptive ventilation system;
Figure 5 shows a schematic view of fourth embodiment of an adaptive ventilation system in first configuration;
Figure 6 shows a schematic view of a fourth embodiment of an adaptive ventilation system in second configuration;
Figure 7 shows a schematic view of a fourth embodiment of an adaptive ventilation system in third configuration.

### DETAILED DESCRIPTION

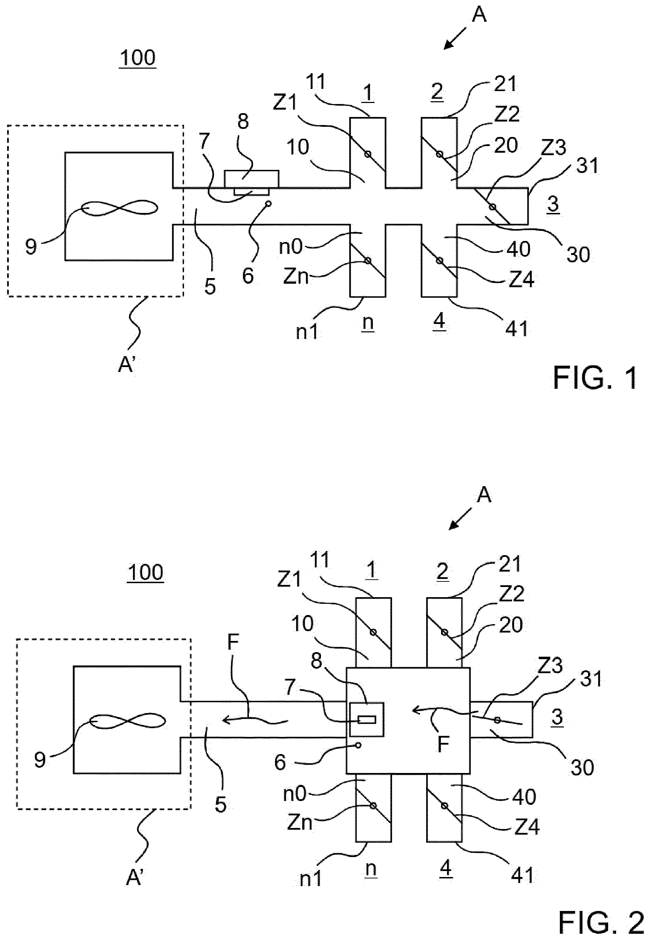

Figure 1 illustrates a first embodiment of an adaptive system for air management A. The air management system may provide a ventilation system. The system is operatively connected to a building 100 or other internal space comprising volumetric spaces to be ventilated. Typically, the spaces are fully or partially segregated (airflow is prevented or minimal between the spaces). The spaces are provided by rooms 1-n. In some embodiments, the spaces may be fluidly linked and/or merely spaced from one another, but otherwise within the same room or internal structure. The spaces may experience different environmental conditions. For example, one space may be a kitchen area of a room, and the second space may be a living area of a room.

The system may be provided in a residential building (e.g. an house or apartment) and/or a commercial space (e.g. an office or shopping centre). In some embodiments, the system may be used in an industrial environment. In some embodiments, the system may be used in a vehicle, such as an aeroplane or water vessel. It can be appreciated the system may be used in any suitable environment where ventilation is required.

The ventilation system A comprises dampers Z1, Z2, Z3, Z4, ... , Zn. Each damper comprises a ventilation connection with a respective space to be ventilated (i.e. rooms 1, 2, 3, 4, ... , n) in the building 100. The system comprises a plurality of dampers, preferably at least two. The number of dampers may vary depending on the number of the spaces to be ventilated in a particular configuration. Typically, the system comprises between 2 and 20 dampers (e.g. for residential system), however, the number of dampers may be between 2 and 100 dampers for more complex arrangements.

The ventilation system A comprises an air collector 6 configured to collect air from the spaces to be ventilated 1, 2, 3, 4, ... , n. The air collector comprises a casing, housing or cavity configured to operatively connect the ducts. The ducts and the collector 6 thus define a fluidly connected space. The collector 6 may comprise a plastic and/or metallic housing.

The ventilation system A comprises a plurality of ventilation ducts 10, 20, 30, 40, ... , n0. The ducts form a ventilation connection between the respective spaces to be ventilated 1, 2, 3, 4, ... , n and the air collector 6. In general, said incoming air duct for directing air flow from said spaces may be a ventilation duct connector, such as a duct connector flange. The ducts are connected to the respective spaces via any suitable means. For example, the ducts may comprise rigid and/or flexible hosing, piping or ducts.

The dampers Z1, Z2, Z3, Z4, ... , Zn are mounted in said ducts 10, 20, 30, 40, ... , n0. The dampers are movable, to selectively vary the open or closed state thereof. The dampers may comprise one or more movable plate to selectively allow/prevent airflow therethrough. The damper comprises a valve or like. The dampers therefore adjust the collected air flow from each space to be ventilated. The inlets 11, 21, 31, 41, ... , n1 of said ducts or optionally the inlets of said dampers are located in the spaces to be ventilated. In other words, a damper may be installed part way along the duct or at the out/inlet end of the duct. Typically, each duct comprises a respective damper. In some embodiments, the only a select portion of the ducts comprises a damper (e.g. where selective ventilation is not required).

The ventilation system A comprises at least one air quality sensor 7. The air quality sensor 7 is configured to sense the air quality of the air flowing from said spaces 1, 2, 3, 4, ... , n in the air collector 6. The air collector 6 thus defines a single location where the at least one air quality sensor 7 is arranged. Thus, the ventilation system A can use a single detection point for all air intake points 11, 21, 31, 41, ... , n1. With the help of said sensor 7, the quality of air entering the air collector 6 from the rooms 1, 2, 3, 4, ... , n connected to the ducts 10, 20, 30, 40, ... , n0 is analyzed/measured. The air quality sensor 7 is located such that the quality of substantially all air flowing out of the air collector 6 can be sensed. Typically, if air flow is sufficiently homogenous at the collector 6, a single sensor may be used. However, in some embodiments, multiple sensors may be used to sample across a larger area/volume in the collector 6.

The air quality sensor 7 comprises one or more of: a carbon dioxide (CO₂) sensor; a humidity sensor; odour; carbon monoxide (CO); Radon; smoke; formaldehyde; methane; and/or other harmful gas/material sensor.

A control unit 8 (i.e. controller) is configured to analyze air quality of air flow bypassing the at least one air quality sensor 7. The control unit 8 is electronically controllable. The control unit 8 comprises a printed circuit board. The control unit 8 may be operatively connected to remote device. The remote device may comprise a dedicated device (i.e. a remote control) or a remote computing device (such as a mobile/cellular phone). The control 8 unit may be installed in the outlet duct 8. However, it can be appreciated that the exact location is not pertinent to the invention as hand.

The control unit 8 is configured to selectively control, (i.e. open and close) the adjustable dampers Z1, Z2, Z3, Z4, ... , Zn. The control unit 8 may open/close the dampers based on the information received from the at least one air quality sensor 7, as will be described later. The control unit 8 and the dampers are therefore connected in a feedback cycle.

The control unit 8 may be provided by any suitable computer or processing apparatus (e.g. microcontroller, microprocessor, SoC etc.). The sensor 7 may be integrated into the control unit (i.e. a circuit board thereof).

The system comprises a power supply to provide power thereto and/or other components of the system, such as fans, dampers etc. The power supply comprises a cover or the like (e.g. to ensure watertightness). The power supply may be adjacent the PCB.

In Figure 1, the ventilation ducts 10, 20, 30, 40, ... , n0 are connected to the air collector 6, which is formed of an outlet duct 5. The ducts are provided in a branched/spoke like arrangement. The control unit 8 and/or the at least one air quality sensor 7 are provided within the outlet duct 5. This provides a reliable sampling point, as the air is funneled/concentrated in the duct 5.

As shown in Figure 2 referring to a second embodiment of the ventilation system, the air collector 6 may be case or box shaped. For example, the collector may comprise the form of a diffuser. The collector 6 is provided at the outlet of the casing 6.

In general, the air collector 6 may be a space within the ventilation system into which the air flow from each of the selected inlet ventilation ducts 10, 20, 30, 40, ... , n0 is directed. Typically, the ventilation system A comprises only one outlet duct 5 which is configured to forward all flowing air out of the air collector 6 and the ventilation system.

Optionally, the outlet duct 5 directs the collected air to an optional ventilation unit A' having adjustable ventilation power. The optional ventilation unit A' may comprise a fan 9 having adjustable ventilation power. Said fan 9 may comprise a ventilation motor with adjustable power. The location of ventilation unit A' in Figure 1 may be considered optional. In case the adaptive ventilation system is equipped with a fan and further supplemented with supply valves for the spaces to be ventilated, an outcome is a supply and exhaust air system.

The fan 9 may be controllable by the sensors 7 and/or control unit 8. For example, the control unit 8 may switching on/off and/or speed regulation (volume flow) thereof. The air flow power and air flow volume typically depend on parameters in the building, such as a private home or a private house where the adaptive ventilation system will be installed. Control of the fan may also be determined in accordance with the number of the ducts with a damper in an open state.

In Figure 1, the ventilation system is illustrated in an example state, wherein all dampers Z1, Z2, Z3, Z4, ... , Zn are closed and substantially no air flow is passing the at least one air quality sensor 7. The ventilation system is therefore inactive.

During operation, the ventilation system checks the air quality in each space to be ventilated. Each space is tested in a separate, individual fashion. Each space is thus tested sequentially. This initial stage may be called a test mode. In such a test mode, the adjustable dampers Z1, Z2, Z3, Z4, ... , Zn connected to the ducts are opened sequentially (i.e. one at a time). The dampers for the other ducts remain closed. For example, damper Z1 is opened, with the remaining dampers being closed. Air is drawn through the system by fan 9 and the quality is tested. Next. Damper Z1 is closed and damper Z2 is opened. The process is repeated and the air quality sensor 7 analyses the air passing from each space to be ventilated in turn. Typically, each and every space is tested, however, in in some embodiments, only a select portion of the spaces may be tested.

The cycle of testing and measuring air parameters of each space 1, 2, 3, 4, ... , n to be ventilated may be called air quality testing interval. The interval may last from several seconds to several minutes for each space, preferably from 3 seconds to 3 minutes. In generally, one set of air quality air sensors 7 is used for the entire ventilation system which receives air quality parameters alternately/sequentially from each duct 10, 20, 30, 40, ... , n0.

After the initial operation in test mode, the ventilation system ventilates the spaces in accordance with the measured parameters. During the measurement phase, the air quality levels are measured for each space. The measurements are compared with the predefined threshold or preset parameter. The control unit then opens and/or closes the damper for said space in accordance with the comparison. Typically, the damper will be opened when above the threshold, and closed when below the threshold. For example, the system ventilates spaces where the measured carbon dioxide concentration is higher than a threshold carbon dioxide concentration. Preferably, the system ventilates those spaces where the carbon dioxide concentration exceeds 600 PPM, preferably 700 PPM. During initial operation in test mode, preferably no average carbon dioxide concentration measurements are performed.

Additionally or alternatively, after the initial operation in test mode, the ventilation system starts to ventilate those spaces where the humidity is increased, preferably after parameters of humidity were compared in each space. Preferably the system ventilates those spaces, where the humidity is several percent higher than an average humidity in the spaces measured by the humidity sensor and the control unit 8. Since the indoor humidity requirements are different in different seasons, the results of the average measurements are compared with the measurement in each room. This allows the system not to take into account what time of year it is. This enables the system to adapt to the humidity for each season of the year or regions.

As described above, the qualities of the air sensed may include at least one of the following: carbon dioxide concentration, air humidity and other harmful concentration.

Additionally or alternatively, after the initial operation in test mode, the ventilation system starts to ventilate those spaces where the other harmful gaseous, dust, particulate or aerosol or particle including concentration is increased, preferably after parameters of the other harmful concentration were compared in each space. Preferably the system ventilates those spaces, where the other harmful concentration is higher than the preset parameters other harmful concentration in the spaces measured by the other harmful concentration sensor and the control unit 8.

Thus, when the air quality test in the test mode of all air intake points is completed, the ventilation system opens or closes (or leaves open or leaves closes) only selected dampers to which the spaces with air parameters exceeding the predefined values are connected. The system controls by the control unit 8 that substantially sufficient air flow F is implemented in the outlet duct 5. This may be implemented for example by turning on an optional fan 9, the speed of said fan depending on the air quality parameters obtained. The force needed for moving the air through the ventilation system may come from an external source, such as a fan in the building being ventilated. Thus, based on the data received from each air flow collection point 11, 21, 31, 41, ... , n1, after analyzing the air quality in each room 1, 2, 3, 4, ... , n, the ventilation system opens or leaves open for a preset ventilation time for intake only those dampers with parameter values exceeding the preset air quality parameters.

The cycle of ventilating the spaces with air parameters exceeding the preset values lasts a preset ventilation time, depending on the air quality parameters such as concentration of CO2, humidity etc.

In some embodiments, the system may only partially open/close the dampers. Thus, the system may provide intermediate ventilation (i.e. rather than a binary, on/off state). The degree of the damper opening may be determined in accordance with the measured air quality. The system may comprise a plurality of predefined measured air quality thresholds associated with a specific degree of damper opening.

After said preset ventilation time, the system may repeat the cycle of testing the air quality of each space 1, 2, 3, 4, ... , n to be ventilated and may open/close selected dampers again where necessary. After the cycle of ventilating the spaces, the testing and ventilation cycles may be repeated alternatingly during the basic operation of the adaptive ventilation system. In case no one of the air quality parameters does exceed the preset values, the system may switch off.

The adaptive ventilation system may be forced to operate in a maximum operational mode at maximum output or maximum volume flow or maximum fan 9 speed, so that for example on demand the whole building can be ventilated quickly. The ventilation system may also be set automatically to switch from the maximum operational mode into the basic operation again.

Figure 2 shows an example of air flow in the second embodiment of the adaptive ventilation system A illustrated in Figure 1, wherein a difference with the system in Figure 1 is that the at least two incoming air ducts are connected to the case shaped air collector 6 and the at least one air quality sensor 7 integrated with the control unit 8 is arranged to the case shaped air collector 6. In general, said incoming air duct for directing air flow from said spaces may be a ventilation duct connector such as a duct connector flange. Said at least one air quality sensor 7 is located adjacent to a connection point of the outlet duct 5 forwarding the air flow out of the air collector 6 case. Thus, the at least one air quality sensor 7 is located such that the quality of substantially all air flowing out of the air collector 6 can be sensed. The adjustable damper Z3 has been adjusted open, controlled by the control unit 8. Air from room 3 flows through the inlet 31 of the duct 30 and passes by the closing part of the damper Z3 as shown by the arrows F. The air flow arrives at the case shaped air collector 6 and bypasses the at least one air quality sensor 7 which senses the air for selected air quality parameters together with the control unit 8. The control unit 8 makes a control decision based on e.g. preset air quality parameters and/or by comparing sensor data received from air flowing from other spaces. The control unit 8 commands the opening and closing of the adjustable damper Z3 depending on the information received from the at least one air quality sensor 7.

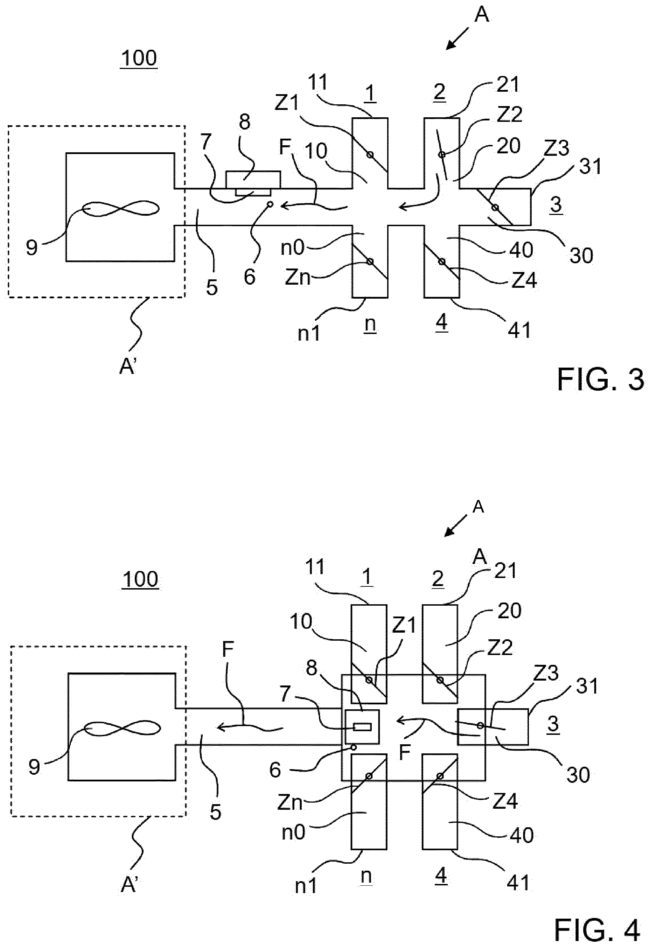

Figure 3 shows an example of air flow in the first embodiment of the adaptive ventilation system A illustrated in Figure 1, wherein the adjustable damper Z2 has been adjusted open, as controlled by the control unit 8. Air from room 2 flows through the inlet 21 of the duct 20 and passes by the closing part of the damper Z2 as shown by the arrows F. The air flow arrives at the outlet duct 5 and flows through the air collector 6. The at least one air quality sensor 7 in the outlet duct 5 senses the air for selected air quality parameters together with the control unit 8. The control unit 8 opens and closes the adjustable damper Z2 depending on the information received from the at least one air quality sensor 7.

Figure 4 shows an example of air flow in a third embodiment of an adaptive ventilation system A, wherein a difference with the system in Figure 2 is that the adjustable dampers Z1, Z2, Z3, Z4, ... , Zn are connected to the case or box shaped air collector 6. According to an example the adjustable dampers Z1, Z2, Z3, Z4, ... , Zn are installed within or inside the air collector 6. The at least one air quality sensor 7 integrated with the control unit 8 is arranged to the case shaped air collector 6. Said at least one air quality sensor 7 is located adjacent to a connection point of the outlet duct 5 to the air collector 6 case. Thus, the at least one air quality sensor 7 is located such that the quality of substantially all air flowing out of the air collector 6 can be sensed. The adjustable damper Z3 has been adjusted open, controlled by the control unit 8. Air from room 3 flows through the inlet 31 of the duct 30 and passes by the closing part of the damper Z3 as shown by the arrows F. The air flow arrives at the case shaped air collector 6 and bypasses the at least one air quality sensor 7 which senses the air for selected air quality parameters together with the control unit 8. The control unit 8 makes a control decision based on e.g. preset air quality parameters and/or by comparing sensor data received from air flowing from other spaces. The control unit 8 commands the opening and closing of the adjustable damper Z3 depending on the information received from the at least one air quality sensor 7.

According to an embodiment, the closing parts of the dampers Z1, Z2, Z3, Z4, ... , Zn are configured to be moved by stepper motors. The steppers motors receive a signal from the control unit and thereby turning the closing parts.

According to an embodiment, in private houses the control unit 8 controls the fan of the ventilation system of the private house.

According to an example variant of the ventilation system A in apartment buildings, the ventilation system is configured to use a constantly maintained, defined discharge in a common ventilation shaft of the apartment building. The common ventilation shaft may provide the suction force for moving the air through the ventilation system according to the invention. The ventilation system A may be arranged within each apartment and connected to the common ventilation shaft of the apartment building. The ventilation system A may regulate the removal of air from each apartment into said common shaft, the fresh air flow being provided inside the apartment through supply valves provided in the rooms of said apartment.

According to an embodiment the ventilation system is adapted to recover heat from the out flowing air, preferably by a heat pump or a recuperator installed at the outlet duct 5. According to an example heat is discharged to water in a heating or a hot water supply system.

A recuperator is a counter-flow energy recovery heat exchanger that may be positioned within the exhaust air stream of the ventilation system A, in order to recover the waste heat. Generally, a recuperator may be used to extract heat from the exhaust and use it to preheat air entering the ventilation system A. Thereby, the recuperator can improve the energy efficiency of the ventilation system as a whole.

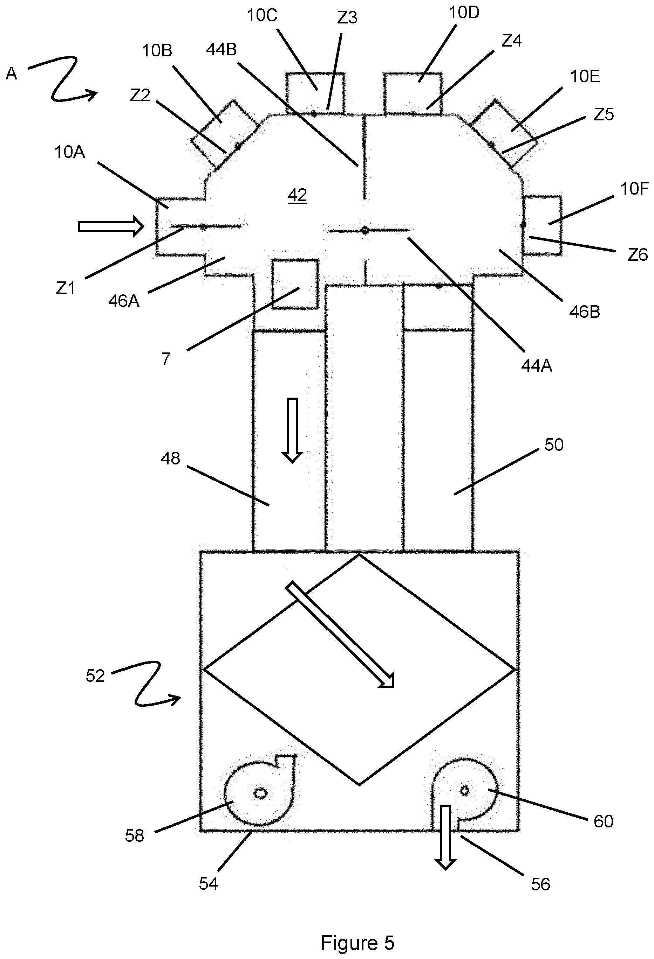

A further embodiment of the invention is shown in figure 5. The further embodiment is substantially the same as the previous embodiments, and like features will not be repeated for the sake of brevity. A housing/cavity 42 of the system comprises a divider or partition 44. The divider 44 at least partially separates or segregates one portion of the ducts 10A-C from a second portion 10D-F of the ducts. The cavity 42 is therefore partially separated/segregated accordingly to form sub-compartments 46A and 46B. In the present embodiment, three of the ducts are connected to one sub-compartment 46A and three of the ducts are connected to the second sub-compartment 46B. The ducts are therefore divided equally.

The divider 44 comprises a damper portion 44A. The partition damper 44A comprises a closure or plate configured to selectively open or close to allow/prevent air to pass through. In the present embodiment, the damper 44A, extends only partially across the cavity 42. The remainder of divider 44B comprises a fixed/rigid portion. It can be appreciated the relative size of the damper portion 44A can be adjusted according to user requirements. For example, in some embodiments, the fixed portion 44B is not provided, and the movable damper extends across the cavity 42.

It can be appreciated the ducts may be divided in any fashion, as required. Each sub-compartment 46 may comprise any number of ducts. Each sub-compartment 46 may comprise a different number of ducts to the other sub-compartments 46. In some embodiments, the cavity 42 may comprise a plurality of dividers 44. The ducts may therefore be divided into three or more segregated portions accordingly (i.e. three or more sub-compartments 46 are provided).

In the present embodiment, the sub-compartments 46 are provided within a shared housing, this provides compact arrangement (e.g. for easier maintenance). In some embodiments, the sub-compartments 46 may be spaced. The sub-compartments 46 may be separated via a duct or the like.

The ventilation system is operatively connected to an air exhaust 48 and a supply system 50. The air exhaust/supply system comprises a heat recovery system 52. The heat recovery system 52 comprises a heat exchanger or similar arrangement configured to exchange heat between outgoing and incoming air. The heat recovery system 52 comprises an air inlet 54 and an air outlet 56. The inlet 54 and outlet 56 are operatively connected to the external environment.

The inlet 54 and outlet comprise respective air movers 58,60 (e.g. fan or impeller). The control unit 8 may control the air movers 58,60 (i.e. the air flow rate therethrough), as previously described. The ventilation system may comprise a humidifier, dehumidifier, biocidal system, air conditioning (i.e. cooling), heating system, or other conventional air management system.

An air quality sensor 7 is operatively provided between the ducts 10 and the outlet 56. In the present embodiment, the sensor 7 is provided adjacent an outlet of the cavity 42 or in the air exhaust system 48. Such a point defines a collector 6, as previously described. However, it can be appreciated, that the sensor may be provided in any suitable location in the airflow between the ducts 10 and the outlet 56.

The segregated duct systems are connected to respective environments. Typically, the environments of the spaces are different (i.e. they have different levels of environmental pollution or air quality). This allows the system to provide different ventilation to the different environmental spaces. For example, the first sub-compartment 46B is connected to an environment where a relatively large level of ventilation is required. The environment may comprise an environment where significant odour, water vapour, dust, fumes etc. are present. Such environments may comprise kitchens, bathrooms, workshops, rooms containing machinery etc. The second sub-compartment 46A may be connected to an environment where relatively little ventilation is required. Such environments may comprise general living or working environments, warehouses, or storerooms etc.

It can be appreciated that such an arrangement can be provided with any number of environments. For example, if three different environmental spaces are provided, then three sub-compartments 46 may be provided accordingly.

The operation of the system will now be described. In a first step, the quality of each space or selection thereof is tested, as previously described. In figure 5, the damper for duct 10A and the air quality of the space therein is tested using sensor 7. The dampers for the remaining ducts 10B-F are closed. Although the partitioning damper 44A is shown as open in figure 4, it can be appreciated the exact state of the damper 44A is not pertinent. Air passes through the exhaust system 48, heat exchanger 52 and outlet 56. The outlet fan 60 operates at a slow speed (i.e. at a fraction of the maximum flow therethrough). The supply fan 58 may be turned off.

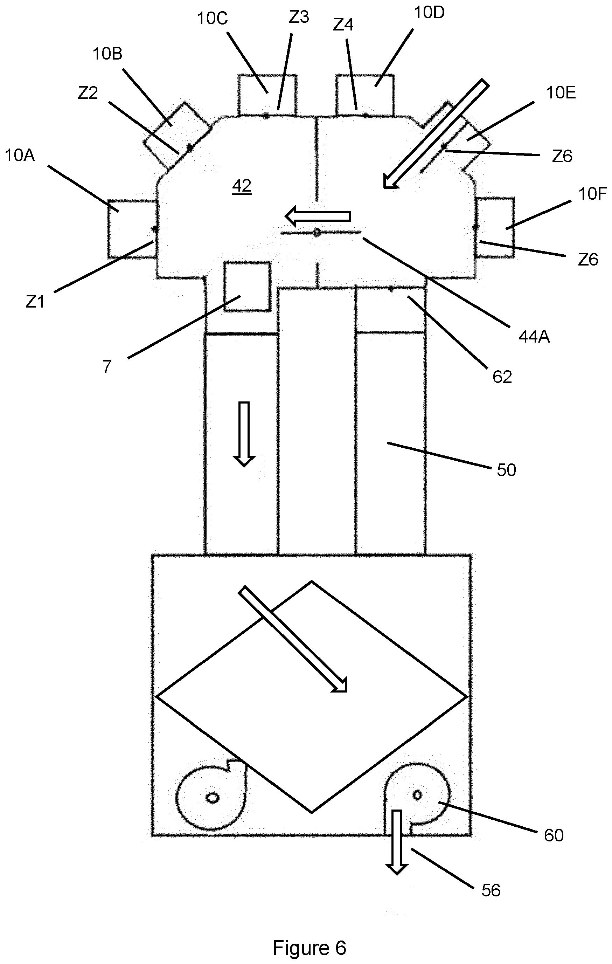

In figure 6, the air quality is tested for duct 10E. The partitioning damper 44A is opened to ensure air flow from duct 10E, through sub-compartment 46B and out through sub-compartment 46A. Thus air travels through both sub-compartments 46A,B. Air passes over the sensor to determine the quality thereof. This is repeated for all or any of the ducts 10A-F sequentially, as required. The testing regime is as otherwise previously described.

During the testing mode, a damper 62 is provided in the air supply system 50. This ensures air does not enter the system, which may affect the air sensor 7.

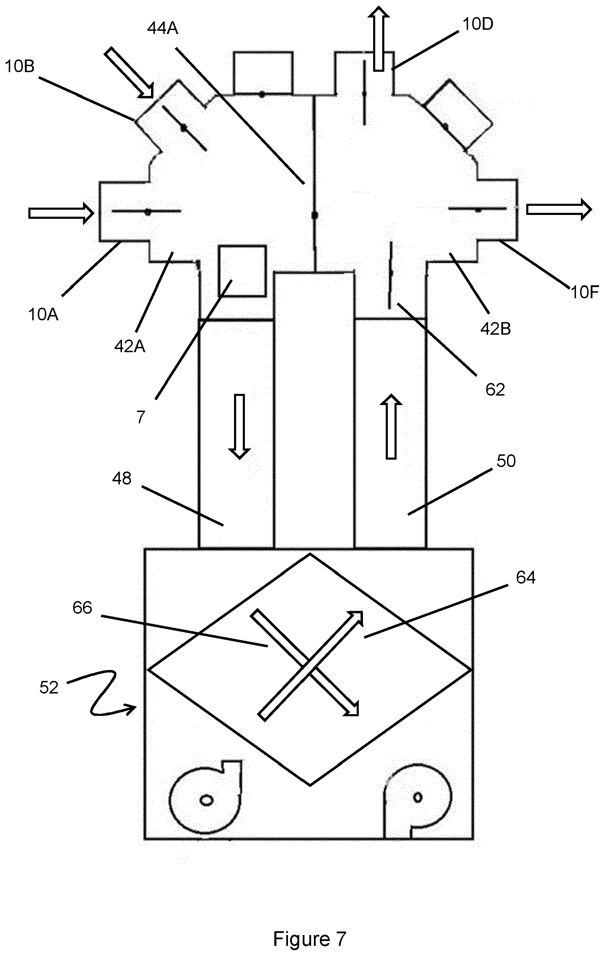

After the testing regime is performed, the system enters a ventilation regime, as shown in figure 7. Incoming air 64 enters the heat recovery system 52, and heat is transferred from outgoing air 66. The heated incoming air 64 enters sub-compartment 46B and exits the cavity 42 via the open ducts 10. In the present example, ducts 10D and 10F are open. Incoming air is thus directed to spaces having a large ventilation requirement.

Outgoing air 66 is drawn via ducts 10A and 10B into sub-compartment 46A. This air is drawn from spaces required relatively less ventilation. The partition damper 44A is closed to prevent mixing of the incoming 64 and outgoing air in the cavity 42 mixing. The air 66 passes through the exhaust system 48 and into the heat recovery system 52. The outgoing air 66 heats the incoming air 64, and is then exhausted from the system.

The system can selectively adjust the level of ventilation for each environment according to desired ventilation. The desired ventilation is determined by the measured airflow in testing regime accordingly. Typically, greater ventilation is provided to areas with lower air quality. This prevents over or under ventilation of the environment accordingly. This reduces energy consumption of the system, as well as heat less from over ventilating living spaces. For example, a well configured system may reduce heat loss by up to 50%. The heat recovery system further reduces losses, and sensors in the heat recovery system can test each space individually.

The partition allows individual or isolated testing of the outgoing and incoming airflow. The system can also test air quality in spaces which typically only receive air supply (i.e. are not directly exhausted). The partition allows easy switching between the test and ventilation mode.

After a predetermined period of time, then the testing regime is repeated, and the air flow is adjusted as required. The test mode may be as otherwise described.

In some embodiments, the air quality sensors may be provided in a one or more of the spaces or corresponding ducts individually (i.e. rather than using a centrally located sensor). The sensors are operatively connected the system to provide control thereof.

In some embodiments, during the testing regime, the system is configured to heat and/or dry the heat exchanges of the heat recovery system. This ensures the heat recovery system is ready for next use.

By the invention heat losses of the building can be minimized. For the heating the building needs less energy. The energy efficiency of the ventilation system may be close to a ventilation system equipped with a heat recovery system. This can be achieved through the adaptability of the system. This will bring great benefits to the customer in terms of easy installation and maintenance of the ventilation system, with no need to replace or recycle filters. The carbon footprint of production and services may be decreased and much lower than with related prior art.

The invention enables to control the ventilation system depending on the presence of people in the rooms and as a consequence of exceeding the established air quality parameters in these rooms and not to ventilate rooms where there is nobody and air quality parameters are not exceeded, but to provide there periodic "background" ventilation.

The ventilation system according to the invention can be used in private houses, single family houses and in apartment buildings, like a smart air distributor with common exhaust system of the building concerned. The ventilation system according to the invention can be used in buildings where small and medium air volumes are required.

In the application, several details have been presented as preferred. This means that they are preferred, however they are not to be understood as necessary, because it may be that the arrangement can be implemented also without them. It is to be understood that the above description and the accompanying figures are only intended to illustrate the present invention. It will be obvious to a person skilled in the art that the invention can be varied and modified without departing from the scope of the invention.

## Claims

1. An air management system (A) for ventilation of spaces (1, 2, 3, 4, ... , n) comprising:
an air collector (6), at least two incoming air ducts (10A-F) for directing air flow from said spaces fluidly connected to the air collector (6),
at least two dampers (Z1, Z2, Z3, Z4, ... , Zn) each configured to selectively adjust the incoming air flow from one of said at least two incoming air ducts;
at least one air quality sensor (7) configured to measure the air quality of air flow passing the at least one air quality sensor (7), and a controller (8) configured to control the opening and closing of the at least two dampers; **characterized in that**:
the air collector (6) comprises a partition (44B) configured to divide a cavity defined by the air collector (6) into at least two sub-compartments (46A,46B), each of the sub-compartments (46A,46B) comprising at least one of the ducts, and where the partition comprises a partition damper (44A) configured to selectively adjust the air flow between the at least two sub-compartments (46A,46B).

2. An air management system (A) according to claim 1, where one of the sub-compartments (46A,46B) comprises an air exhaust (48) and an other of sub-compartments (46A,46B) comprises an air supply (50).

3. An air management system (A) according to claim 2, where the air exhaust (48) and the air supply (50) are operatively connected via a heat recovery system (52).

4. An air management system (A) according to claim 2 or 3, where when air is being exhausted from air exhaust (48) and air is being supplied air supply (50), the controller (8) is configured to close the partition damper (44A).

5. An air management system (A) according to any of claims 2-4, where the air supply (50) comprises a damper (62) to selectively adjust the airflow through the air supply (50).

6. An air management system (A) according to any preceding claim, where at least one of the ducts (10E-F) in one sub-compartment (46B) is connected to an environment having a relatively lower air quality, and at least one of the ducts (10A-C) in an other sub-compartment (46A) is connected to an environment having a relatively higher air quality.

7. An air management system (A) according to any preceding claim, where the air quality is determined by levels of one or more of: carbon dioxide; carbon monoxide; humidity; odour; or dust.

8. An air management system (A) according to any preceding claim, where the controller (8) is configured to sequentially open two or more dampers (Z1, Z2, Z3, Z4, ... , Zn) to measure the respective air quality flowing therethrough.

9. An air management system (A) according to claim 8, where the controller (8) is configured open the partition damper (44A) before/during said measurement.

10. An air management system (A) according to claim 8 or 9 when dependent on claim 5, where the controller (8) is configured close the air supply damper (62) before/during said measurement.

11. An air management system according to any of claims 8-10, where the controller (8) is configured to control the opening and closing of the at least two dampers (Z1, Z2, Z3, Z4, ... , Zn) in accordance with the air quality measured by the at least one air quality sensor (7).

12. An air management system (A) according to any preceding claim, where one or more space is operatively connected to the air supply, and the space is fluidly connected to the sensor to allow measurement of the air quality flowing from said space.

13. An air management system (A) according to any of claims 2-12, where the sensor (7) is provided within or adjacent the air exhaust (48).

14. A method of operating an air management system (A) for ventilation of spaces (1, 2, 3, 4, ... , n) comprising:
providing an air collector (6) with at least two incoming air ducts (10A-F) and directing air flow from said spaces to the air collector (6),
providing at least two dampers (Z1, Z2, Z3, Z4, ... , Zn) each configured to selectively adjust the incoming air flow from one of said at least two incoming air ducts;
providing at least one air quality sensor (7) configured to measure the air quality of air flow passing the at least one air quality sensor (7), and a controller (8) configured to control the opening and closing of the at least two dampers; **characterized in that**:
the air collector (6) comprises a partition (44B) configured to divide a cavity defined by the collector into at least two sub-compartments (46A,46B), each of the sub-compartments (46A,46B) comprising at least one of the ducts, and adjusting the air flow between the at least two sub-compartments (46A,46B) via a damper (44A) provided by the partition (44B).

15. An air management system (A) for ventilation of spaces (1, 2, 3, 4, ... , n) comprising:
an air collector (6), at least two incoming air ducts (10A-F) for directing air flow from said spaces fluidly connected to the air collector (6),
at least two dampers (Z1, Z2, Z3, Z4, ... , Zn) each configured to selectively adjust the incoming air flow from one of said at least two incoming air ducts;
at least one air quality sensor (7) configured to measure the air quality of air flow passing the at least one air quality sensor (7), and a controller (8) configured to control the opening and closing of the at least two dampers; **characterized in that**:
the air collector (6) comprises a partition (44B) configured to divide a cavity defined by the collector into at least two sub-compartments (46A,46B), each of the sub-compartments (46A,46B) comprising at least one of the ducts, and where one of the sub-compartments (46A,46B) comprises an air exhaust (48) and an other of sub-compartments (46A,46B) comprises an air supply (50).
